# EUROPÄISCHE PATENTSCHRIFT

(11) **EP 1 582 760 B1**
(45) Veröffentlichungstag und Bekanntmachung des Hinweises auf die Patenterteilung: **25.04.2007**
(21) Anmeldenummer: 05006178.7
(22) Anmeldetag: 22.03.2005
(51) Int. Cl.: F16D 55/224

(54) **Belaghaltereinrichtung für Bremszangen**
Brake pad holder for brake tongs
Support de patin pour pinces de frein

(30) Priorität: 23.03.2004 DE 102004014188
(43) Veröffentlichungstag der Anmeldung: 05.10.2005
(73) Patentinhaber: KNORR-BREMSE Systeme für Schienenfahrzeuge GmbH, 80809 München (DE)
(72) Erfinder: Wirth, Xaver, Dr., 85737 Ismaning (DE); Elstorpff, Marc-Gregory, Dr., 80638 München (DE)
(74) Vertreter: Mattusch, Gundula

(56) Entgegenhaltungen:
- DE-A1- 1 800 595
- DE-A1- 2 003 341
- DE-A1- 2 233 180
- DE-A1- 2 941 128
- US-A- 4 454 932
- US-A- 5 462 139

## Beschreibung

Die vorliegende Erfindung betrifft eine Belaghaltereinrichtung für Bremszangen, insbesondere für Schienenfahrzeuge, mit einem rechten Belaghalter und einem linken Belaghalter, zwischen denen eine Bremsscheibe montierbar ist und die über einen Bügel miteinander verbunden sind.

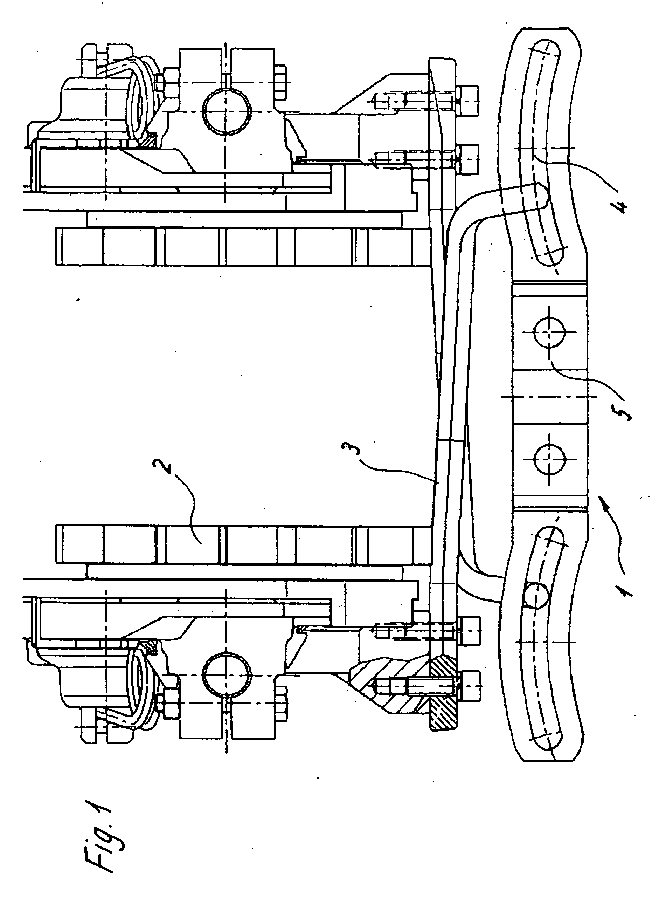

Scheibenbremsen weisen meist einen Bremsbelaghalter auf, der über eine Bremszange bewegbar ist, um die Bremsbeläge gegen eine Bremsscheibe zu drücken. Dabei können Bremszylinder, Bremsgestängesteller, Bremszange und Bremsbelaghalter mit Bremsbelag zu kompakten Bremszangeneinheiten zusammengefasst sein. Um einen radialen Schrägverschleiß von Bremsbelägen in Bremszangen zu vermeiden, werden dabei meist Hängelaschen an Bremsbelaghaltern oder Parallelhaltevorrichtungen eingesetzt, mit denen eine Verdrehung des Belaghalters verhindert wird, aber eine Abstandsänderung zugelassen wird. In Figur 1 ist ein Parallellenker eines Belaghalters 1 dargestellt, an dem Bremsbeläge 2 vorgesehen sind, die nach innen auf eine nicht dargestellte Bremsscheibe bewegbar sind. Der Belaghalter 1 umfasst zwei Führungsstangen 3, die ein abgekröpftes Ende aufweisen, das in einer Kulissenführung 4 eines Bügels 5 aufgenommen ist. Somit ist gewährleistet, dass sich die Belaghalter entsprechend der Kulissenführung 4 aufeinander zubewegen. Statt einer Kulissenführung 4 ist es auch bekannt, Gleitführungen für eine lineare Bewegung der Belaghalter vorzusehen.

Bei den vorbekannten Führungselementen für Belaghalter ist nachteilig, dass diese Schiebeführungen anfällig gegen Verschmutzung, Vereisung und Verformung, beispielsweise durch Steinschlag sind. Bei einer Verschmutzung kann eine Selbsthemmung auftreten, die die Bremswirkung zumindest beeinträchtigt. Da nur kleine Berührungsflächen beim Gleitkontakt vorhanden sind, sind die Führungen meist verschleißanfällig. Zusätzlich sind die Führungen auch teuer in der Herstellung.

Die DE 2 003 341 zeigt eine Scheibenbremse mit zwei Reibbelagträgern an gegenüberliegenden Seiten einer Bremsscheibe. Die Reibbelagträger sind über ein Paar Schwingarme gehalten, die an einem Bremsausgleichshebel gelenkig gelagert sind. Der Bremsausgleichshebel ist wiederum am Chassis angelenkt, wodurch eine gleichmäßige Abnutzung der Reibbeläge und deren parallele Anordnung erreicht werden soll. Die Bremsbelagträger sind zudem über eine starre Stangenverbindung verbunden, an der eine Betätigungsanordnung vorgesehen ist.

Es ist daher Aufgabe der vorliegenden Erfindung eine Belaghaltereinrichtung zu schaffen, die einen einfachen Aufbau besitzt und relativ unanfällig gegen Verschleiß ist.

Diese Aufgabe wird mit einer Belaghaltereinrichtung mit den Merkmalen des Anspruches 1 gelöst.

Wie aus dem Stand der Technik bekannt, ist hierbei zumindest an einer Seite der Bügel der Belaghaltereinrichtung mit dem Belaghalter nach Art eines Parallellenkers über eine Lasche mit zwei Drehachsen verbunden. Durch die Vorsehung von zwei Drehachsen an der Lasche zur Führung des Belaghalters ist die mechanische Führung des Belaghalters wesentlich unempfindlicher gegen Verschmutzungen und ein Festfrieren bzw. Verklemmen. Die vergleichsweise großen Lagerflächen an den Drehachsen sorgen ferner für einen geringen Verschleiß und sind auch unempfindlich gegenüber Vibrationen. Ferner lässt sich auf einfache Weise der Winkel der Belaghalter einstellen, insbesondere um einen Schrägverschleiß zu vermeiden. Die so gebildete Belaghaltereinrichtung ist ferner einfach aufgebaut und durch geringe Reibmomente leicht bewegbar. Erfindungsgemäß ist der Bügel in Richtung der Drehachse elastisch ausgebildet. Denn bei einem gewissen Verschleiß des Belages bzw. der Bremsscheibe kann es zu Achsseitenbewegungen und zu einer Verschränkung der Belaghalter kommen, die dann mit einem gewissen Versatz auf die Bremsscheibe gedrückt werden. Dieser Versatz kann durch eine Elastizität des Bügels kompensiert werden.

Gemäß einer bevorzugten Ausführungsform ist an beiden Seiten der Bügel gelenkig mit einer Lasche und diese gelenkig mit einem Belaghalter verbunden. Dadurch sind die Belaghalter nach Art eines Parallellenkers geführt und können über die Lasche jeweils verschwenkt und mit vorgegebenem Winkel auf die Bremsscheibe gedrückt werden.

Für einen einfachen Aufbau der Belaghaltereinrichtung sind die Drehachsen durch je einen Gelenkzapfen gebildet. Dabei kann der Bügel und die Laschen gegen eine axiale Verschiebung gesichert sein.

Die Laschen lassen sich einfach in Form eines Flacheisens mit Öffnungen für die Drehachsen oder durch Ausbildung durch ein gebogenes Blech herstellen.

Für das effektive Aufbringen von Bremskräften sind die Belaghalter vorzugsweise im Wesentlichen parallel zueinander angeordnet, können aber auch in einem vorgegebenen Winkel zueinander eingestellt werden, um einem Schrägverschleiß vorzubeugen.

Die Erfindung wird nachfolgend anhand mehrerer Ausführungsbeispiele mit Bezug auf die beigefügten Zeichnungen näher erläutert. Es zeigen:
- Figur 1: eine Ansicht eines als Parallellenker ausgebildeten Bremshalters nach dem Stand der Technik;
- Figur 2: eine perspektivische Ansicht eines Ausführungsbeispieles einer Belaghaltereinrichtung mit Belaghaltern, die über Laschen mit einem Bügel verbunden sind, wobei der Bügel jedoch nicht, wie erfindungsgemäß vorgesehen, elastisch ausgebildet ist.
- Figur 3: eine geschnittene Detailansicht der Belaghaltereinrichtung der Figur 2;
- Figur 4: eine perspektivische Ansicht einer Belaghaltereinrichtung gemäß einem zweiten, nicht erfindungsgemäßen Ausführungsbeispiel;
- Figur 5: eine perspektivische Ansicht einer Belaghaltereinrichtung gemäß einem dritten, nicht erfindungsgemäßen Ausführungsbeispiel;
- Figur 6: eine schematische Ansicht der Belaghalter an einer Bremszange;
- Figur 7: eine geschnittene Ansicht eines ersten Ausführungsbeispiels einer erfindungsgemäßen Belaghaltereinrichtung;
- Figur 8: eine geschnittene Ansicht des Bügels der Figur 7 im verschobenen Zustand;
- Figur 9: eine geschnittene Ansicht eines modifizierten Bügels einer Belaghaltereinrichtung;
- Figur 10: eine perspektivische Ansicht einer modifizierten Belaghaltereinrichtung, und
- Figur 11: eine Schnittansicht entlang der Linie A-A der Figur 10.

Eine Belaghaltereinrichtung 10 umfasst einen rechten Belaghalter 11 und einen linken Belaghalter 12, die nach Art eines Parallellenkers jeweils über eine Lasche 14 bzw. 15 mit einem Bügel 13 gelenkig verbunden sind. Der Bügel 13 ist c-förmig ausgebildet und mit Enden 25 in eine zylindrische Öffnung der Laschen 14 bzw. 15 eingefügt. Die Laschen 14 und 15 sind um diese Enden 25 drehbar gelagert. Beabstandet von dem Bügel 13 sind Gelenkzapfen 18 in Öffnungen an den Laschen 14 bzw. 15 und den Belaghaltern 11 und 12 eingefügt, sodass die Laschen 14 und 15 drehbar mit den Belaghaltern 11 bzw. 12 verbunden sind.

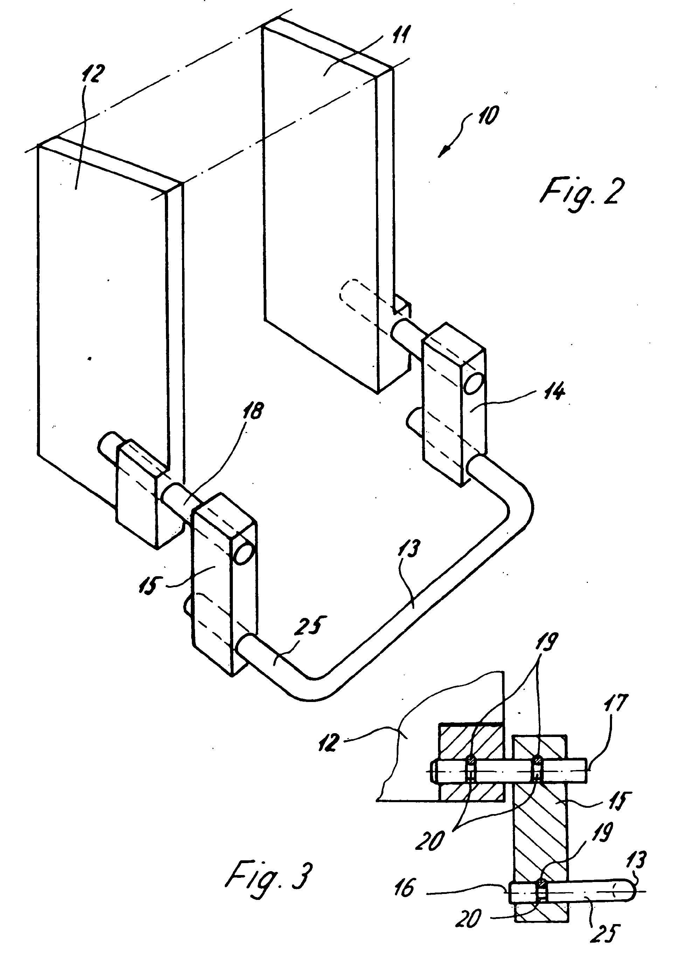

Wie in Figur 3 zu sehen ist, ist der Belaghalter 12 gegen axiales Verschieben gegenüber der Lasche 15 gesichert. Hierfür ist in dem Gelenkzapfen 18 im Bereich der Lasche 15 eine Nut 20 und im Bereich des Belaghalters 12 eine zweite Nut 20 ausgespart, in die jeweils ein Sicherungsstift 19 eingefügt ist, wobei der Sicherungsstift 19 jeweils teilweise an dem Belaghalter 12 bzw. der Lasche 15 und teilweise in dem Gelenkzapfen 18 aufgenommen ist.

Auf ähnliche Weise ist das Ende 25 des Bügels 13 in der Lasche 15 aufgenommen und über eine Nut 20 und einen Stift 19 gesichert. Durch den Gelenkzapfen 18 wird eine Drehachse 17 ausgebildet und durch den Schenkel 25 des Bügels 13 wird eine Drehachse 16 ausgebildet.

Für eine Betätigung der Belaghaltereinrichtung kann eine nicht dargestellte Bremszange oder andere mechanische Betätigungsmittel eingesetzt werden, um die Belaghalter 11 und 12 gegeneinander zu drücken und somit Bremsbeläge auf eine Bremsscheibe einwirken zu lassen. Durch die gelenkige Halterung der Belaghalter 11 und 12 entfällt die Notwendigkeit einer Schiebeführung in Kulissen oder Gleitbuchsen.

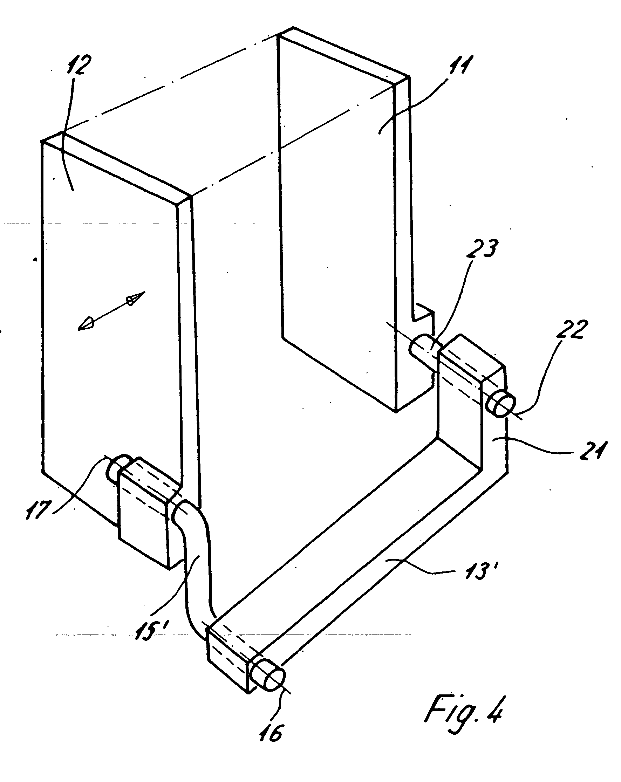

In Figur 4 ist eine modifizierte Ausführungsform einer Belaghaltereinrichtung gezeigt, die wiederum einen rechten Belaghalter 11 und einen linken Belaghalter 12 aufweist, die über einen Bügel 13' miteinander verbunden sind. Der Bügel 13' ist L-förmig ausgebildet und mit dem rechten Belaghalter 11 nur über einen Gelenkzapfen 23 verbunden. Hierfür ist der Gelenkzapfen 23 an einem Schenkel 21 des Bügels 13' gelenkig angeordnet, wie dies in Figur 3 gezeigt ist. Auf gleiche Weise ist der Gelenkzapfen 23 mit dem Belaghalter 11 verbunden. Auf der gegenüberliegenden Seite ist der Bügel 13' über einen gekröpften Gelenkzapfen 15' mit dem linken Belaghalter 12 verbunden. Der gekröpfte Gelenkzapfen 15' ist mit einem Endabschnitt jeweils drehbar mit dem Belaghalter 12 und dem Bügel 13' verbunden, wodurch zwei versetzte Drehachsen 16 und 17 ausgebildet sind. Bei der Belaghaltereinrichtung der Figur 4 sind somit nur drei Drehachsen 16, 17 und 22 ausgebildet und nur auf der linken Seite ist der Bügel 13' nach Art eines Parallellenkers mit dem Belaghalter 12 verbunden.

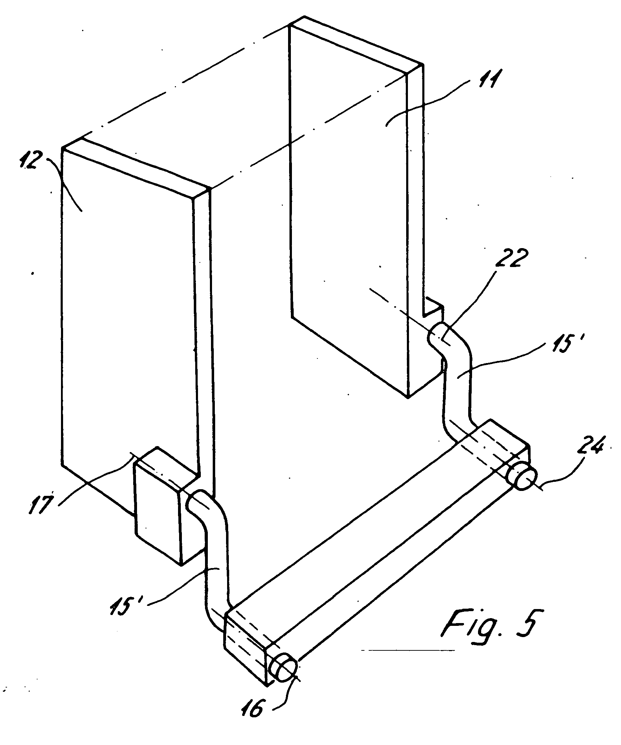

In Figur 5 ist ein drittes Ausführungsbeispiel einer Belaghalteeinrichtung gezeigt, bei der die Belaghalter 11 und 12 jeweils über einen gekröpften Gelenkzapfen 15' mit einem als Flacheisen ausgebildeten Bügel 13" verbunden sind. Die Art der Verbindung der gekröpften Gelenkzapfen 15' mit den Belaghaltern 11 und 12 und dem Bügel 13" kann entsprechend der Figur 3 ausgebildet sein. Bei dieser Ausgestaltung sind die Belaghalter 11 und 12 je über zwei Drehachsen 17 und 16 bzw. 22 und 24 mit dem Bügel 13" nach Art eines Parallellenkers verbunden.

Die Gelenkbolzen können dabei mit Spiel für eine drehbare Lagerung der Belaghalter 11 und 12 bzw. des Bügels 13 sorgen. Dadurch wird eine Parallelführungstoleranz erreicht, die alternativ auch durch eine kegelige Bohrung oder einen kegeligen Bolzen erhalten werden kann.

Die Gelenkbolzen können kostengünstig aus einem Federdraht mit einem Durchmesser zwischen 10 und 14 mm gebildet sein. Die axiale Sicherung ist durch eine Nut und einen Querstift erreicht, es können allerdings auch andere mechanische Mittel zur axialen Sicherung eingesetzt werden. Ferner ist es möglich, den Gelenkrahmen durch eine Zugfeder zwischen den Laschen 14 und 15 oder durch Gummiringe in den Gelenken vorzuspannen.

Der Winkel der Belaghalter 11 und 12 zueinander kann über geeignete mechanische Mittel eingestellt werden. Bei einer eindeutigen Schrägverschleißtendenz eines Bremsbelages bei einer bestimmten Anwendung kann durch Schrägstellung des Belaghalters 11 bzw. 12 eine optimierte Verschleißabnutzung bereitgestellt werden.

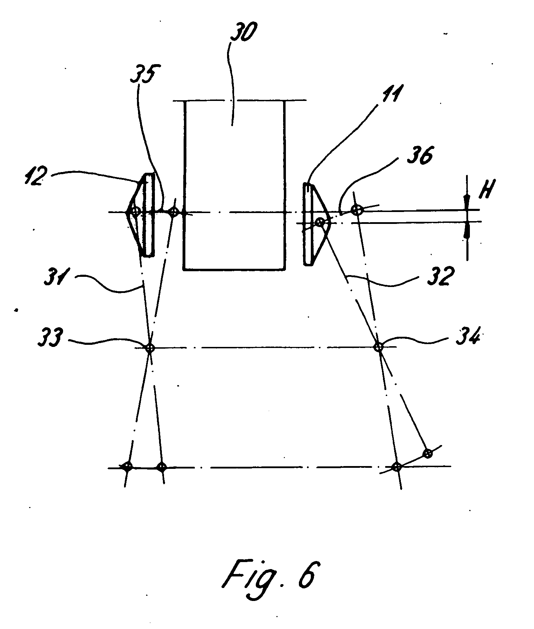

In Figur 6 ist eine weitere Funktion einer Belaghaltereinrichtung anschaulich dargestellt. Die Belaghalter 11 und 12 einer Belaghaltereinrichtung sind an Hebeln 31 und 32 gelagert, die um Drehachsen 33 und 34 drehbar sind. Dadurch sind Bewegungsbahnen 35 und 36 für die Belaghalter 12 und 11 vorgegeben, wenn diese auf die Bremsscheibe 30 gedrückt und wieder von ihr wegbewegt werden. Infolge nicht paralleler Bremshebel 31 und 32 durch zunehmenden Verschleiß an der Bremsscheibe oder den Bremsbelägen kommt es bei Achsseitenbewegungen zu einer Verschränkung der Belaghalter 11 und 12, sodass diese um das Maß H versetzt zueinander auf die Bremsscheibe 30 gedrückt werden. Dieses Verschieben der Belaghalter 11 und 12 muss bei der erfindungsgemäßen Belaghaltereinrichtung berücksichtigt werden.

Für einen gewissen Toleranzausgleich ist es möglich, die Drehlager mit etwas Spiel auszubilden, um eine gewisse Verschieblichkeit der Belaghalter 11 und 12 zu gewährleisten.

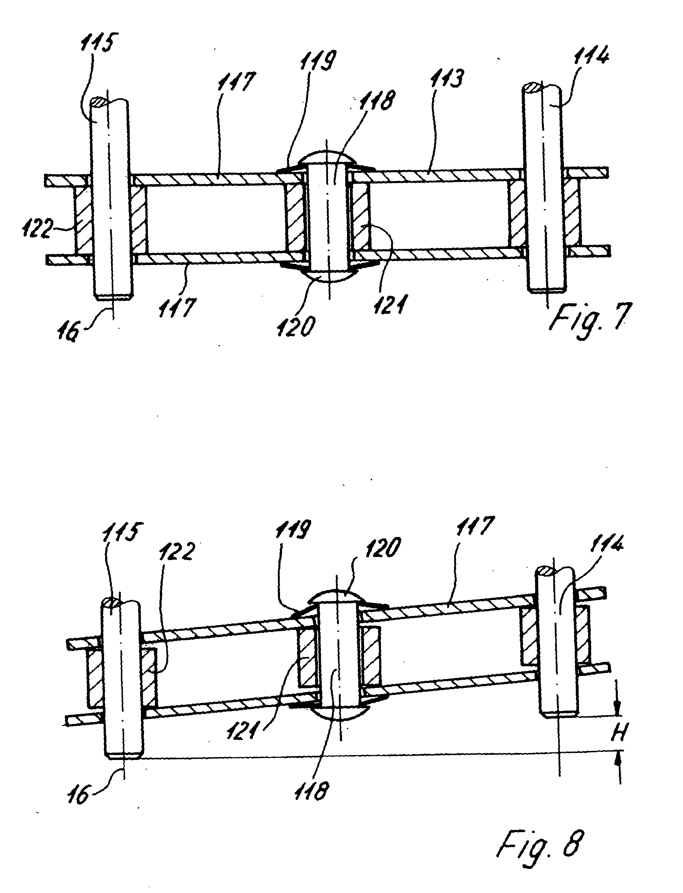

Gemäß der Erfindung ist der Bügel der Belaghaltereinrichtung elastisch ausgebildet, um ein solches Verschieben kompensieren zu können. Ein solcher Bügel 113 ist in Figur 7 dargestellt. Der Bügel weist zwei Platten 117 auf, die mittig über einen Zapfen 118 miteinander verbunden sind, der eine Distanzhülse 121 durchgreift und mit einem Kopf 120 eine Feder 119 von außen auf die Platten 117 drückt. Seitlich sind Gelenkzapfen 114 und 115 vorgesehen, die die beiden Platten 117 durchgreifen und mittig durch eine Distanzhülse 122 durchgeführt sind.

Bei einer Verschiebung der Belaghalter 11 und 12 gemäß Figur 6 muss der Bügel 113 diese Bewegung kompensieren, wie dies in Figur 8 dargestellt ist. Die Platten 117 werden schräg gestellt und durch die Federn 119 lässt sich der Bügel 113 winklig gegen eine gewisse Vorspannung anordnen, damit die Distanz H überbrückt werden kann. Die Gelenkzapfen 114 und 115 können somit versetzt zueinander angeordnet sein, ohne dass die Gelenkverbindung im Übrigen beeinträchtigt ist. Der Bügel 113 lässt sich nach wie vor um die Gelenkzapfen 114 und 115 drehen. Der Bügel 113 ist somit in der Lage, die Verdrehmomente der Beläge aufzunehmen und trotzdem eine parallelogrammartige Verschiebung zuzulassen. Der Bügel 113 kann bei einer Belaghaltereinrichtung gemäß den Ausfiihrungsbeispielen der Figuren 2 bis 5 eingesetzt werden.

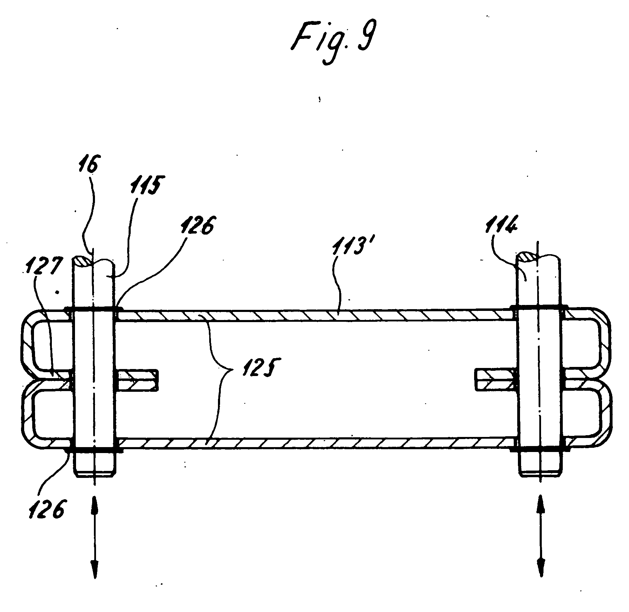

In Figur 9 ist eine weitere Ausführungsform eines elastischen Bügels 113' gezeigt. Der Bügel 113' umfasst zwei gebogene Bleche 125, die in einem Randbereich jeweils c-förmig gebogen sind und mittig einen Schenkel 127 besitzen. In diesem Randbereich ist der Bügel 113 mit einer durchgängigen Öffnung versehen, durch die ein Gelenkzapfen 114 bzw. 115 durchgeführt ist. Der Gelenkzapfen 115 bzw. 114 ist gegen ein axiales Verschieben durch Sicherungsringe 126 gesichert. Auch dieser Bügel 113' kann bei einem Verschieben der Gelenkzapfen 114 und 115 relativ zueinander noch um diese gedreht werden, da die gebogenen Bleche 125 eine entsprechende Elastizität aufweisen.

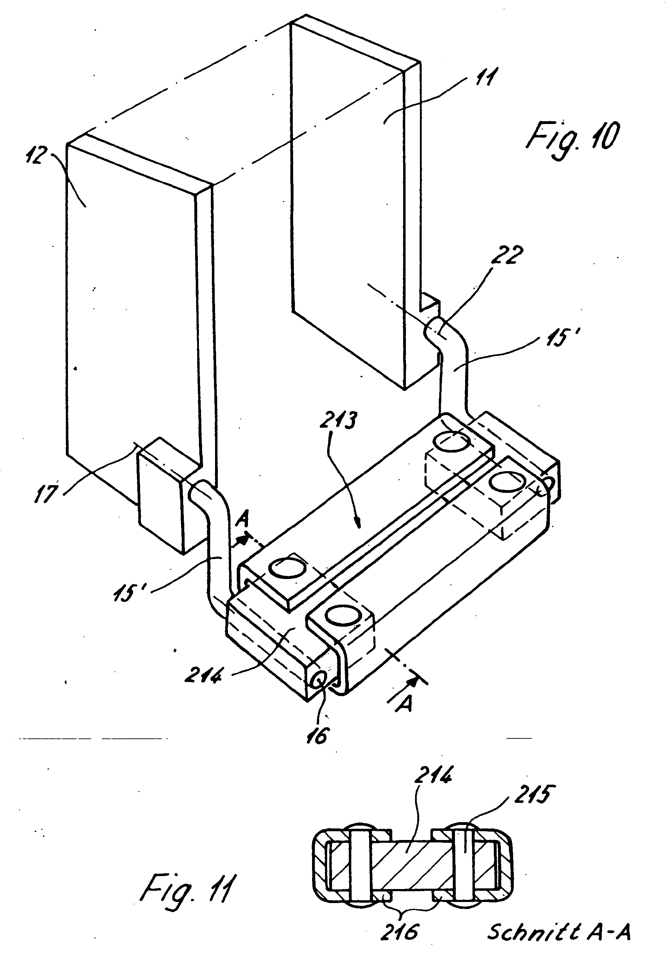

Bei dem in Figuren 10 und 11 gezeigten Ausführungsbeispiel sind die Belaghalter 11 und 12 über Gelenkzapfen 15' mit einem elastischen Bügel 213 verbunden. Der Bügel 213 umfasst zwei U-förmig gebogene Bleche 216, in deren Endabschnitten jeweils ein Block 214 festgelegt ist. In dem Block 216 ist die Drehachse 16 des Gelenkzapfens 15' aufgenommen. Der Block 216 ist dabei über Nieten 215 jeweils mit dem U-förmigen Blech 216 verbunden. Der so gebildete Bügel 213 besitzt wiederum ein ausreichendes Maß an Elastizität und kann auf einfache Weise in unterschiedlichen Längen bereitgestellt werden, wobei statt der Vorsehung von zwei Blechen 216 auch nur ein Blech mit längeren Schenkeln montiert werden kann.

Die Erfindung ist nicht auf die dargestellten Ausführungsbeispiele beschränkt. Es können auch andere mechanische Mittel eingesetzt werden, um einen Bügel nach Art eines Parallellenkers mit einem Belaghalter 11 bzw. 12 zu verbinden. Die Elastizität des Bügels 113 bzw. 113' lässt sich auch auf andere Weise bereitstellen, insbesondere kann der Bügel auch an eine Ausgangsposition vorgespannt sein.

## Patentansprüche

1. Belaghaltereinrichtung für Bremszangen, insbesondere für Schienenfahrzeuge, mit einem rechten Belaghalter (11) und einem linken Belaghalter (12), zwischen denen eine Bremsscheibe (30) montierbar ist und die über einen Bügel (13, 13', 113, 113') miteinander verbunden sind, wobei zumindest an einer Seite der Bügel (13, 13', 113, 113') mit den Belaghaltern (11, 12) nach Art eines Parallellenkers über eine Lasche (15, 15') mit zwei Drehachsen (16, 17) verbunden ist, **dadurch gekennzeichnet, dass** der Bügel (13, 13', 113, 113') in Richtung der Drehachsen (16, 17) elastisch ausgebildet ist.

2. Belaghaltereinrichtung nach Anspruch 1, **dadurch gekennzeichnet, dass** an beiden Seiten der Bügel (13) gelenkig mit einer Lasche (15, 15') und diese gelenkig mit einem Belaghalter (11, 12) verbunden ist.

3. Belaghaltereinrichtung nach Anspruch 1 oder 2, **dadurch gekennzeichnet, dass** die Drehachsen (16, 17) durch einen Gelenkzapfen (18, 23, 25) gebildet sind.

4. Belaghaltereinrichtung nach einem der Ansprüche 1 bis 3, **dadurch gekennzeichnet, dass** der Bügel (13, 13', 113, 113') und die Laschen (15, 15') gegen eine axiale Verschiebung gesichert sind.

5. Belaghaltereinrichtung nach einem der Ansprüche 1 bis 4, **dadurch gekennzeichnet, dass** die Laschen (15, 15') durch ein Flacheisen mit Öffnungen für die Drehachsen (16, 17) gebildet sind.

6. Belaghaltereinrichtung nach einem der Ansprüche 1 bis 4, **dadurch gekennzeichnet, dass** die Laschen (15, 15') durch ein gebogenes Blech gebildet sind.

7. Belaghaltereinrichtung nach einem der Ansprüche 1 bis 6, **dadurch gekennzeichnet, dass** die Belaghalter (11, 12) im Wesentlichen parallel zueinander angeordnet sind.

8. Belaghaltereinrichtung nach einem der Ansprüche 1 bis 7, **dadurch gekennzeichnet, dass** der durch die Belaghalter (11, 12) ausgebildete Winkel einstellbar ist.

## Claims

1. Brake pad holder device for brake callipers, in particular for rail-bound vehicles, comprising a right-hand brake pad holder (11) and a left-hand brake pad holder (12), between which a brake disc (30) can be mounted and which are connected to each other via a bracket (13, 13', 113, 113'), with said bracket (13, 13', 113, 113') being connected, at least on one side, to said brake pad holders (11, 12) in the manner of a parallel link via a tab (15, 15') with two axes of rotation (16, 17), **characterised in that** said bracket (13, 13', 113, 113') presents a resilient configuration along the direction of said axes of rotation (16, 17).

2. Brake pad holder device according to Claim 1, **characterised in that** said bracket (13) is articulated to a tab (15, 15') and said tab is articulated to one brake pad holder (11, 12) on both sides.

3. Brake pad holder device according to Claim 1 or 2, **characterised in that** said axes of rotation (16, 17) are constituted by a joint pin (18, 23, 25).

4. Brake pad holder device according to any of the Claims 1 to 3, **characterised in that** said bracket (13, 13', 113, 113') and said tabs (15, 15') are protected from axial displacement.

5. Brake pad holder device according to any of the Claims 1 to 4, **characterised in that** said tabs (15, 15') are formed by a flat iron element with openings for said axes of rotation (16, 17).

6. Brake pad holder device according to any of the Claims 1 to 4, **characterised in that** said tabs (15, 15') are constituted by a bent sheet metal part.

7. Brake pad holder device according to any of the Claims 1 to 6, **characterised in that** said brake pad holders (11, 12) are disposed in an essentially parallel relationship with each other.

8. Brake pad holder device according to any of the Claims 1 to 7, **characterised in that** the angle formed by said brake pad holders (11, 12) is adjustable.

## Revendications

1. Dispositif de support de garniture pour des pinces de frein, en particulier destiné à des véhicules sur rail, comportant un support de garniture droit (11) et un support de garniture gauche (12) entre lesquels peut être monté un disque de frein (30) et lesquels sont reliés l'un à l'autre par un étrier (13, 13', 113, 113'), au moins sur un côté l'étrier (13, 13', 113, 113') étant relié aux supports de garniture (11, 12) à la manière d'une bielle parallèle par l'intermédiaire d'une barre de liaison (15, 15') munie de deux axes de rotation (16, 17), **caractérisé en ce que** l'étrier (13, 13', 113, 113') est élastique dans la direction des axes de rotation (16, 17).

2. Dispositif de support de garniture selon la revendication 1, **caractérisé en ce que** l'étrier (13) est articulé des deux côtés à une barre de liaison (15, 15') et que celle-ci est articulée à un support de garniture (11, 12).

3. Dispositif de support de garniture selon la revendication 1 ou 2, **caractérisé en ce que** les axes de rotation (16, 17) sont formés par un pivot (18, 23, 25).

4. Dispositif de support de garniture selon l'une des revendications 1 à 3, **caractérisé en ce que** l'étrier (13, 13', 113, 113') et les barres de liaison (15, 15') sont empêchées de se déplacer axialement.

5. Dispositif de support de garniture selon l'une des revendications 1 à 4, **caractérisé en ce que** les barres de liaison (15, 15') sont formées par une pièce de fer plate munie d'ouvertures pour les axes de rotation (16, 17).

6. Dispositif de support de garniture selon l'une des revendications 1 à 4, **caractérisé en ce que** les barres de liaison (15, 15') sont formées par une tôle recourbée.

7. Dispositif de support de garniture selon l'une des revendications 1 à 6, **caractérisé en ce que** les supports de garniture (11, 12) sont pratiquement parallèles l'un à l'autre.

8. Dispositif de support de garniture selon l'une des revendications 1 à 7, **caractérisé en ce que** l'angle formé par les supports de garniture (11, 12) est réglable.
